# EUROPEAN PATENT APPLICATION

(11) **EP 4 470 773 A1**
(43) Date of publication of application: **04.12.2024**
(21) Application number: 22922131.2
(22) Date of filing: 13.12.2022
(51) Int. Cl.: B32B 27/10, B32B 27/30, B32B 29/00, B32B 37/12, B65D 65/40, B65D 65/46

(54) **LAMINATE PRODUCTION METHOD**

(30) Priority: 24.01.2022 JP 2022008756; 09.12.2022 JP 2022197426
(71) Applicant: Sakata INX Corporation, Osaka-shi, Osaka 550-0002 (JP)
(72) Inventor: TAKAHASHI, Ryota, Osaka-shi, Osaka 550-0002 (JP); USHIJIMA, Yosuke, Osaka-shi, Osaka 550-0002 (JP)
(74) Representative: Brann AB
(86) International application number: PCT/JP2022/045882
(87) International publication number: WO 2023/139980

(57) **Abstract**

Provided is a method of manufacturing a laminated body, the method including a polysand step of overlaying a first laminated body and a second laminated body on top of each other and integrating them via a heat seal layer, wherein the first laminated body comprises a first paper layer, a first anchor coat layer, and a first gas barrier layer, wherein the second laminated body comprises a second paper layer, a second anchor coat layer, and a second gas barrier layer, wherein at least one of the first laminated body and the second laminated body comprises a heat seal layer, wherein the polysand step is a step of integrating the first laminated body and the second laminated body via the heat seal layer, and wherein the heat seal layer contains an acrylic resin.

## Description

### TECHNICAL FIELD

The present invention relates to a method of manufacturing a laminated body. More specifically, the present invention relates to a method of manufacturing a laminated body that can be manufactured by a simple method and is excellent in oxygen barrier property, water vapor barrier property, and disintegrating property of paper during recycling.

### BACKGROUND ART

Nowadays, as there has been a demand for plastic reduction, a paper packaging material has been attracting attention as a packaging material that replaces a plastic packaging material (for example, Patent Document 1, etc.). The paper packaging material comprises a gas barrier coating agent or a water vapor barrier coating agent in order to provide the paper packaging material with gas barrier property and water vapor barrier property that the plastic packaging material has. However, paper is a permeable base material. Therefore, the paper packaging material requires large amounts of a gas barrier coating agent and a water vapor barrier coating agent. In order to reduce amounts of the gas barrier coating agent and the water vapor barrier coating agent to be applied, the paper base material may be applied with an anchor coat agent to perform filling. However, this method requires complicated manufacturing steps and also takes a high cost. Moreover, in order to provide the paper base material with water vapor barrier property, there is a method of laminating a plastic film to the paper base material. However, with this method, the paper is difficult to be dissociated from the plastic film, which makes it difficult to recycle the paper.

### PRIOR ART DOCUMENT

### Patent Document

Patent Document 1: JP H10-504768 A

### SUMMARY OF THE INVENTION

The present invention has been made in view of such conventional problems, and it is an object of the present invention to provide a method of manufacturing a laminated body that can be manufactured by a simple method and is excellent in oxygen barrier property, water vapor barrier property, and disintegrating property of paper during recycling.

As a result of intensive studies to solve the above-described problems, the present inventors have found that a laminated body that can be manufactured by a simple method and is excellent in oxygen barrier property, water vapor barrier property, and disintegrating property of paper during recycling can be obtained by preparing two laminated bodies, overlaying them on top of each other, and integrating them, via a heat seal layer containing an acrylic resin, by a polysand method, so that the above-described problems can be solved, and completed the present invention.

The method of manufacturing a laminated body relating to one aspect of the present invention that solves the above-described problems is a method of manufacturing a laminated body, the method including a polysand step of overlaying a first laminated body and a second laminated body on top of each other and integrating them via a heat seal layer, wherein the first laminated body comprises a first paper layer, a first anchor coat layer, and a first gas barrier layer, wherein the second laminated body comprises a second paper layer, a second anchor coat layer, and a second gas barrier layer, wherein at least one of the first laminated body and the second laminated body comprises a heat seal layer, wherein the polysand step is a step of integrating the first laminated body and the second laminated body via the heat seal layer, and wherein the heat seal layer contains an acrylic resin.

### EMBODIMENT FOR CARRYING OUT THE INVENTION

### <Method of manufacturing laminated body>

The method of manufacturing a laminated body according to one embodiment of the present invention includes a polysand step of overlaying a first laminated body and a second laminated body on top of each other and integrating them via a heat seal layer. The first laminated body comprises a first paper layer, a first anchor coat layer, and a first gas barrier layer. The second laminated body comprises a second paper layer, a second anchor coat layer, and a second gas barrier layer. At least one of the first laminated body and the second laminated body comprises a heat seal layer. The polysand step is a step of integrating the first laminated body and the second laminated body via the heat seal layer. The heat seal layer contains an acrylic resin.

In the method of manufacturing a laminated body of the present embodiment, it is preferable that the first laminated body comprises a first heat seal layer containing an acrylic resin and that the second laminated body comprises a second heat seal layer containing an acrylic resin. In this case, the heat seal layer is preferably a layer in which the first heat seal layer and the second heat seal layer are overlayed on top of each other and integrated in a polysand step which will be mentioned later. The laminated body is thereby excellent in oxygen barrier property and water vapor barrier property. Moreover, the laminated body is more excellent in disintegrating property of paper during recycling.

### (First laminated body)

The first laminated body comprises a first paper layer, a first anchor coat layer, and a first gas barrier layer. The first laminated body appropriately comprises a first heat seal layer.

### · First paper layer

A first paper layer is not particularly limited. By way of an example, the first paper layer is paper such as a coated paper, a coat ball paper, and a synthetic paper, or the like.

A basis weight of the first paper layer is not particularly limited. By way of an example, the basis weight of the first paper layer is preferably 10 g/m² or more, and more preferably 30 g/m² or more. Moreover, the basis weight of the first paper layer is preferably 400 g/m² or less, and more preferably 300 g/m² or less. When the basis weight of the first paper layer is within the above-described ranges, the laminated body easily obtains practical strength and processability.

A thickness of the first paper layer is not particularly limited.

### · First anchor coat layer

A first anchor coat layer is provided on the first paper layer. The first anchor coat layer can be formed by a conventional method using a known anchor coat agent. By way of an example, a coating method of the anchor coat agent is a coating method that uses various coating devices such as a blade coater, an air knife coater, a roll coater, a bar coater, a gravure coater, a rod blade coater, a lip coater, a curtain coater, a die coater, and a spray coater. A coated anchor coat agent is appropriately heated and dried in an oven or the like.

An anchor coat agent is not particularly limited. By way of an example, the anchor coat agent comprises resin such as a polyurethane resin, an acrylic resin, a melamine resin, a polyester resin, a phenol resin, an amino resin, and a fluororesin.

In addition to the above-described resins, the anchor coat agent may further comprise an isocyanate compound in order to enhance adhesiveness and hot water resistance. The isocyanate compound only needs to have one or more isocyanate groups in a molecule, for example, hexamethylene diisocyanate, xylylene diisocyanate, isophorone diisocyanate, tolylene diisocyanate, and the like.

The anchor coat agent may comprise a liquid medium to dissolve or disperse the above-described resins and isocyanate compound.

A coating amount (dry film thickness) of the anchor coat layer is not particularly limited. By way of an example, the coating amount of the anchor coat layer is preferably 10 g/m² or more, and more preferably 15 g/m² or more. Moreover, the coating amount (dry film thickness) of the anchor coat layer is preferably 25 g/m² or less, and more preferably 20 g/m² or less.

### · First gas barrier layer

A first gas barrier layer is provided on the first anchor coat layer. The first gas barrier layer is formed of a gas barrier agent. The gas barrier agent comprises, for example, a water-soluble polymer and a pigment.

A water-soluble polymer is not particularly limited. By way of an example, water-soluble polymers are polyvinyl alcohols such as a fully saponified polyvinyl alcohol, a partially saponified polyvinyl alcohol, and an ethylene copolymerized polyvinyl alcohol; proteins such as casein, a soy protein, and a synthetic protein; starches such as an oxidized starch, a cationized starch, an urea phosphate esterified starch, and a hydroxyethyl etherified starch; cellulose derivatives such as carboxymethyl cellulose, hydroxymethyl cellulose, and hydroxyethyl cellulose; polyvinylpyrrolidone, sodium alginate, or the like. Among them, water-soluble polymers are preferably polyvinyl alcohols or cellulose derivatives, and more preferably polyvinyl alcohols, from the viewpoint of improving gas barrier property.

The gas barrier agent may include a crosslinking agent from the viewpoint of improving gas barrier property. The crosslinking agent is not particularly limited. By way of an example, the crosslinking agent is a polyvalent metal salt (a compound in which a polyvalent metal such as copper, zinc, silver, iron, potassium, sodium, zirconium, aluminum, calcium, barium, magnesium, and titanium is bonded with an ionic substance such as a carbonate ion, a sulfate ion, a nitrate ion, a phosphate ion, a silicate ion, a nitrogen oxide, and a boron oxide), an amine compound, an amide compound, an aldehyde compound, or the like.

The amide compound is a hydrazide compound or the like. The hydrazide compound is preferably a dihydrazide compound, such as oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide, and itaconic acid dihydrazide.

A content of the crosslinking agent is preferably 1% by mass or more, and more preferably 3% by mass or more, based on a solid content (nonvolatile content) in the gas barrier agent. Moreover, the content of the crosslinking agent is preferably 10% by mass or less, and more preferably 6% by mass or less, based on the solid content (nonvolatile content) in the gas barrier agent.

The gas barrier agent may include a surfactant, a thickener, a water retention agent, an anti-foaming agent, a water resistance agent, dye, a fluorescent dye, and the like.

A coating amount (dry film thickness) of the gas barrier agent is not particularly limited. By way of an example, the coating amount is 0.2 to 20 g/m².

A method of providing the gas barrier layer is not particularly limited. By way of an example, the method of providing the gas barrier layer can be performed by coating and drying the gas barrier layer using various coating devices such as a blade coater, an air knife coater, a roll coater, a bar coater, a gravure coater, a rod blade coater, a lip coater, a curtain coater, a die coater, and a spray coater.

### · First heat seal layer

A first heat seal layer is appropriately provided on the first gas barrier layer. The first heat seal layer may be omitted if a second heat seal layer, which will be mentioned later, is provided. However, in order to further exhibit the effect of the laminated body of the present embodiment, it is preferable that both the first heat seal layer and the second heat seal layer are provided and integrated to form a heat seal layer.

The first heat seal layer is formed of a heat seal agent. The heat seal agent contains an acrylic resin. The first heat seal layer can be formed by a conventional method using a heat seal agent containing a known acrylic resin. By way of an example, a coating method of the heat seal agent is a coating method that uses various coating devices such as a blade coater, an air knife coater, a roll coater, a bar coater, a gravure coater, a rod blade coater, a lip coater, a curtain coater, a die coater, and a spray coater. A coated heat seal agent is appropriately heated and dried in an oven or the like.

An acrylic resin is not particularly limited. By way of an example, the acrylic resin is a (meth)acryl-based polymer obtained by polymerizing a polymerizable monomer containing a (meth)acryl-based monomer. The (meth)acryl-based polymer may be a homopolymer, a copolymer, or a copolymer with a polymerizable monomer other than the (meth)acryl-based monomer. The (meth)acryl-based monomer is a monomer having a (meth)acryloyl group. Moreover, the polymerizable monomer other than the (meth)acryl-based monomer is a monomer having a polymerizable functional group, and examples of the polymerizable functional group include a functional group containing a carbon-carbon unsaturated bond other than a (meth)acryloyl group such as a vinyl group. Besides, in the present embodiment, the (meth)acryloyl group means one or both of an "acryloyl group" and a "methacryloyl group".

The polymerizable monomer is alkyl (meth)acrylate such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, amyl (meth)acrylate, isoamyl (meth)acrylate, n-hexyl (meth)acrylate, 2-ethylhexyl (meth)acrylate, pentadecyl (meth)acrylate, and dodecyl (meth)acrylate; cyclic alkyl (meth)acrylate such as cyclohexyl (meth)acrylate and isobornyl (meth)acrylate; hydrocarbon-based (meth)acrylate in which a portion other than a polymerizable functional group such as (meth)acrylate having an aromatic ring such as phenyl (meth)acrylate consists of hydrocarbon; or the like. Among them, the polymerizable monomer is preferably alkyl (meth)acrylate or cyclic alkyl (meth)acrylate, more preferably methyl (meth)acrylate, ethyl (meth)acrylate, isopropyl (meth)acrylate, n-butyl (meth)acrylate, isobutyl (meth)acrylate, 2-ethylhexyl (meth)acrylate, or cyclohexyl (meth)acrylate, and further preferably methyl (meth)acrylate, n-butyl (meth)acrylate, isobutyl (meth)acrylate, 2-ethylhexyl (meth)acrylate, or cyclohexyl (meth)acrylate.

In the (meth)acryl-based polymer, a structural unit derived from hydrocarbon-based (meth)acrylate is preferably 20% by mass or more and 90% by mass or less, and more preferably 30% by mass or more and 80% by mass or less.

As the polymerizable monomer, a monomer component other than hydrocarbon-based (meth)acrylate may be used, and specifically, a hydroxyl group-containing monomer is preferably used. The hydroxyl group-containing monomer is hydroxyalkyl (meth)acrylate such as 2-hydroxyethyl (meth)acrylate, 2-hydroxypropyl (meth)acrylate, 2-hydroxybutyl (meth)acrylate, 4-hydroxybutyl (meth)acrylate, and 6-hydroxyhexyl (meth)acrylate, or the like. Besides, a hydroxyl group in the hydroxyl group-containing monomer is a hydroxyl group that does not directly bond to an aromatic ring. Among them, the hydroxyl group-containing monomer is preferably 2-hydroxyethyl (meth)acrylate, 2-hydroxypropyl (meth)acrylate, or 2-hydroxybutyl (meth)acrylate.

The hydroxyl group-containing monomer is preferably used in combination with the above-described hydrocarbon-based (meth)acrylate. In this case, the acrylic resin is preferably a (meth)acryl-based copolymer obtained by copolymerizing hydrocarbon-based (meth)acrylate and a hydroxyl group-containing monomer, or a (meth)acryl-based copolymer obtained by copolymerizing hydrocarbon-based (meth)acrylate, a hydroxyl group-containing monomer, and monomer components other than these (other monomer components). The (meth)acryl-based copolymer can be thereby an acrylic polyol containing a plurality of hydroxyl groups.

In the (meth)acryl-based polymer, a structural unit derived from the hydroxyl group-containing monomer is preferably 0.5% by mass or more, and more preferably 1% by mass or more. Moreover, the structural unit derived from the hydroxyl group-containing monomer is preferably 80% by mass or less, and more preferably 70% by mass or less.

As the polymerizable monomer, monomer components other than hydrocarbon-based (meth)acrylate and a hydroxyl group-containing monomer (other monomer components) may be used. Specifically, other monomer components are carboxyl group-containing monomers like acrylic acid, methacrylic acid, crotonic acid, itaconic acid, fumaric acid, maleic acid, and citraconic acid; amino group-containing monomers such as dimethylaminoethyl (meth)acrylate, dimethylaminoethyl (meth)methacrylate, and diethylaminoethyl (meth)acrylate; epoxy group-containing monomers such as glycidyl (meth)acrylate, β-methylglucidyl (meth)acrylate, o-vinylbenzylglycidyl ether, m-vinylbenzylglycidyl ether, p-vinylbenzylglycidyl ether, α-methyl-o-vinylbenzylglycidyl ether, α-methyl-m-vinylbenzylglycidyl ether, α-methyl-p-vinylbenzylglycidyl ether, and 3,4-epoxycyclohexylmethyl (meth)acrylate; alkylene glycol monoalkyl ether (meth)acrylates such as ethylene glycol monomethyl ether acrylate and ethylene glycol monomethyl ether methacrylate; acrylamide-based compounds such as (meth)acrylamide, diacetone acrylamide, and N-methylol acrylamide; (meth)acrylonitrile; styrene derivatives such as styrene, α-methylstyrene, divinylbenzene, and vinyltoluene; various halogenated vinyls like vinyl chloride and vinylidene chloride; or the like.

Moreover, as the polymerizable monomer, a monomer having a functional group having an ultraviolet ray-absorbing function may be used from the viewpoint of improving light resistance, etc. Specifically, the polymerizable monomer is a monomer having an ultraviolet ray-absorbing functional group such as a benzotriazole skeleton, a benzophenone skeleton, a triazine skeleton, and a hindered amine skeleton, and a polymerizable functional group such as a (meth)acryloyl group, or the like.

A content of structural units derived from other monomer components (monomer components other than hydrocarbon-based (meth)acrylate and a hydroxyl group-containing monomer) is preferably 50% by mass or less, and more preferably 40% by mass or less, in the (meth)acryl-based polymer. Besides, a lower limit of the content is not particularly limited, and it only needs to be greater than 0% by mass.

Besides, each of the above-described monomer components (hydrocarbon-based (meth)acrylate, hydroxyl group-containing monomer, and other monomer components) is preferably a monofunctional monomer having one polymerizable functional group in a molecule, as exemplified above, and it may appropriately include a polyfunctional monomer having two or more polymerizable functional groups within a range that does not impair effects of the present embodiment.

The acrylic resin preferably comprises an acrylic emulsion having a core-shell structure. The laminated body is thereby excellent in oxygen barrier property and water vapor barrier property. Moreover, the laminated body is more excellent in disintegrating property of paper during recycling.

The emulsion having a core-shell structure can be produced by a conventional method. By way of an example, the emulsion having a core-shell structure can be produced by a step (1) of supplying a monomer mixture that forms a core polymer and, in the presence of an initiator, polymerizing this monomer mixture to form a core polymer and a step (2) of supplying a monomer mixture that forms a shell polymer to the core polymer obtained in the step (1) and, in the presence of the initiator, polymerizing this monomer mixture to form a shell in the core polymer. Moreover, the emulsion having a core-shell structure can be produced by a step (i) of supplying a monomer mixture that forms a shell polymer and, in the presence of an initiator, polymerizing this monomer mixture to form a shell polymer and a step (ii) of supplying a monomer mixture that forms a core polymer to the shell polymer obtained in the step (i) and, in the presence of the initiator, polymerizing this monomer mixture to form a shell in the core polymer.

An initiator is not particularly limited. By way of an example, the initiator is a peroxide, a persulfate, an azo compound, a redox-based initiator, or a mixture thereof used in emulsion polymerization method, etc., or the like. The peroxide is hydrogen peroxide, ammonium peroxide, sodium peroxide, potassium peroxide, t-butyl peroxide, t-butyl hydroperoxide, cumene hydroperoxide, benzene peroxide, or the like. The persulfate is ammonium persulfate, sodium persulfate, potassium persulfate, or the like. The azo compound is 2,2-azobisisobutyronitrile, 4,4'-(4-cyanovaleric acid), or the like. The redox-based initiator consists of an oxidizing agent and a reducing agent. The oxidizing agent is the above-described peroxide, persulfate, or azo compound, sodium chloride, potassium chloride, sodium bromide, potassium bromide, or the like. The reducing agent is ascorbic acid, glucose, ammonium, sodium hydrogen sulfate, potassium hydrogen sulfate, sodium hydrogen sulfite, potassium hydrogen sulfite, sodium thiosulfate, potassium thiosulfate, sodium sulfide, potassium sulfide, iron (II) ammonium sulfate, or the like.

Polymerization of the monomer mixture can be performed in the presence of an additive such as a surfactant, a chain transfer agent, and a chelating agent. These additives may be added in advance to an aqueous medium used in the step (1), or may be mixed with a monomer mixture supplied in the step (1) or (2).

A surfactant is not particularly limited. By way of an example, the surfactant is a disodium dodecyl diphenyl oxide, disulfonate, or the like. A chain transfer agent is not particularly limited. By way of an example, the chain transfer agent is α-methylstyrene dimer, thioglycolic acid, sodium hydrogen phosphite, 2-mercaptoethanol, N-dodecylmercaptan, t-dodecylmercaptan, or the like. A chelating agent is not particularly limited. By way of an example, the chelating agent is ethylenediaminetetraacetic acid or the like.

The core of the acrylic emulsion having the core-shell structure preferably comprises styrene and 2-ethylhexyl acrylate as monomers. The laminated body is thereby more excellent in oxygen barrier property and water vapor barrier property. Moreover, the laminated body is more excellent in disintegrating property of paper during recycling.

The shell of the acrylic emulsion having the core-shell structure preferably comprises styrene/acryl-based resin. The laminated body is thereby more excellent in oxygen barrier property and water vapor barrier property. Moreover, the laminated body is more excellent in disintegrating property of paper during recycling.

An average particle size of the acrylic emulsion having the core-shell structure is preferably 50 nm or more, and more preferably 100 nm or more. Moreover, the average particle size of the acrylic emulsion having the core-shell structure is preferably 300 nm or less, and more preferably 200 nm or less.

A glass transition temperature of the acrylic resin is preferably -25°C or higher, and more preferably -20°C or higher. Moreover, the glass transition temperature of the acrylic resin is preferably 20°C or lower, and more preferably 15°C or lower. When the glass transition temperature of the acrylic resin is within the above-described ranges, the laminated body is more excellent in bondability to paper.

In the first heat seal layer, a content of the acrylic resin is not particularly limited. By way of an example, the content of the acrylic resin is preferably 60% by mass or more, and more preferably 80% by mass or more, in the first heat seal layer (solid content). Moreover, the content of the acrylic resin may be 100% by mass.

The first heat seal layer preferably comprises paraffin wax. When it comprises paraffin wax, the laminated body is more excellent in water vapor barrier property.

Paraffin wax is a hydrocarbon wax whose main component is straight chain hydrocarbon (normal paraffin).

A weight-average molecular weight (Mw) of paraffin wax is preferably 400 or more, and more preferably 500 or more. Moreover, the weight-average molecular weight of paraffin wax is preferably 1000 or less, and more preferably 800 or less. When the weight-average molecular weight of paraffin wax is within the above-described ranges, the laminated body is more excellent in water vapor barrier property.

A melting point of paraffin wax is preferably 60°C or higher, and more preferably 65°C or higher. Moreover, the melting point of paraffin wax is preferably 90°C or lower, and more preferably 80°C or lower. When the melting point of paraffin wax is within the above-described ranges, the laminated body is more excellent in water vapor barrier property.

In the first heat seal layer, a content of paraffin wax is not particularly limited. By way of an example, the content of paraffin wax is preferably 1% by mass or more, and more preferably 5% by mass or more, in the first heat seal layer (solid content). Moreover, the content of paraffin wax is preferably 20% by mass or less, and more preferably 15% by mass or less, in the first heat seal layer (solid content). When the content of paraffin wax is within the above-described ranges, the laminated body is more excellent in water vapor barrier property.

An acid value of an acrylic resin contained in the heat seal agent is not particularly limited. By way of an example, the acid value is preferably 5 mgKOH/g or more, and more preferably 10 mgKOH/g or more. Moreover, the acid value is preferably 200 mgKOH/g or less, and more preferably 100 mgKOH/g or less. When the acid value is within the above-described ranges, the heat seal agent has a viscosity that allows appropriate coating and has a good storage stability. Besides, in the present embodiment, the acid value is determined by calculating the number of mg of potassium hydroxide required to neutralize 1 g of acrylic resin contained in the heat seal agent.

As a result from above, a first laminated body is produced.

### (Second laminated body)

The second laminated body comprises a second paper layer, a second anchor coat layer, and a second gas barrier layer. The second laminated body appropriately comprises a second heat seal layer. The second heat seal layer may be omitted if the first heat seal layer described above is provided. However, as described above, in order to further exhibit the effect of the laminated body of the present embodiment, it is preferable that both the first heat seal layer and the second heat seal layer are provided and integrated to form a heat seal layer. Moreover, a configuration of each layer in the second laminated body is similar to that described above in relation to the first laminated body. Each layer in the second laminated body may be the same as or different from each layer in the first laminated body.

### <Polysand step>

Returning back to the general description of the method of manufacturing a laminated body, the method of manufacturing a laminated body of the present embodiment includes a polysand step of overlaying a first laminated body and a second laminated body on top of each other and integrating them. The polysand step is a step of integrating a first heat seal layer and a second heat seal layer.

In the polysand step, the first laminated body and the second laminated body are heated with a hot iron, a hot roll, or the like, and integrated, with the first heat seal layer and the second heat seal layer overlayed on top of each other. A heat seal layer is thereby formed, and a laminated body in which the first laminated body and the second laminated body are integrated is produced via the heat seal layer.

A condition for the polysand step is not particularly limited. By way of an example, a temperature at which the first heat seal layer and the second heat seal layer are overlayed on top of each other and heated is preferably 60°C or higher, and more preferably 80°C or higher. Moreover, the temperature is preferably 250°C or lower, and more preferably 200°C or lower. Also, a time for overlaying the first heat seal layer and the second heat seal layer on top of each other and heating them is preferably 1 second or more, and more preferably 2 seconds or more. Moreover, the time is preferably 10 seconds or less, and more preferably 8 seconds or less. Besides, the polysand step may be performed with a coater adopting the above-described heating time.

As a result from above, a laminated body of the present embodiment, in which the first paper layer/first anchor coat layer/first gas barrier layer/heat seal layer where the first heat seal layer and the second heat seal layer are integrated/second gas barrier layer/second anchor coat layer/second paper layer are laminated in this order, is produced. As described above, the first heat seal layer and the second heat seal layer contain an acrylic resin. Therefore, by performing the polysand step, the obtained laminated body can be multi-layered through the simple process and has a good disintegrating property of paper. At this time, when paraffin wax is included, the laminated body has a good water vapor barrier property due to a paraffin component of wax. Furthermore, when the acrylic resin is an acrylic emulsion having a core-shell structure, the laminated body has a good oxygen barrier property. As a result, the obtained laminated body is easily manufactured and has an anchor coat layer, so that it is excellent in oxygen barrier property and water vapor barrier property. Furthermore, the laminated body has a good disintegrating property of paper during recycling.

More specifically, in a case where, after leaving the laminated body of the present embodiment to stand in an atmosphere at 25°C and 90% RH for 72 hours, an oxygen permeability (OTR value, cc/m²/day/atm) is measured with an oxygen permeability measuring device (manufactured by AMETEK MOCON, product name: OX-TRAN 1/50), according to JIS K 7126 B Method, the oxygen permeability of the laminated body is 20 or less, and preferably may be 10 or less.

Similarly, in a case where the laminated body of this embodiment is made into a bag so as to have the same volume with a bag having a size of 10 cm × 10 cm, filled with 15 g of calcium chloride, and then heat-sealed, followed by placing this bag in a thermo-hygrostat at 40°C and 90% RH and measuring a mass every 5 days, to measure a water vapor permeability (WVTR value, g/m²/day) from a slope of a regression line between an elapsed time and a bag mass after the 3rd day, according to JIS Z 0222, the water vapor permeability is 150 g/m²/day or less, and preferably may be 50 g/m²/day or less.

One embodiment of the present invention has been described above. The present invention is not particularly limited to the above-described embodiment. Besides, the above-described embodiment mainly describes an invention having the following configurations.
(1) A method of manufacturing a laminated body, the method including a polysand step of overlaying a first laminated body and a second laminated body on top of each other and integrating them via a heat seal layer, wherein the first laminated body comprises a first paper layer, a first anchor coat layer, and a first gas barrier layer, wherein the second laminated body comprises a second paper layer, a second anchor coat layer, and a second gas barrier layer, wherein at least one of the first laminated body and the second laminated body comprises a heat seal layer, wherein the polysand step is a step of integrating the first laminated body and the second laminated body via the heat seal layer, and wherein the heat seal layer contains an acrylic resin.
   According to such a configuration, the laminated body can be easily manufactured through the polysand step. Moreover, the laminated body has an anchor coat layer and is excellent in oxygen barrier property and water vapor barrier property. Furthermore, the laminated body has a good disintegrating property of paper during recycling.
(2) The method of (1), wherein the first laminated body comprises a first heat seal layer containing an acrylic resin, wherein the second laminated body comprises a second heat seal layer containing an acrylic resin, and wherein the heat seal layer is a layer in which the first heat seal layer and the second heat seal layer are overlayed on top of each other and integrated in the polysand step.
   According to such a configuration, the laminated body is more excellent in oxygen barrier property and water vapor barrier property. Moreover, the laminated body is more excellent in disintegrating property of paper during recycling.
(3) The method of (1) or (2), wherein a glass transition temperature of the acrylic resin is -25°C to 20°C.
   According to such a configuration, the laminated body is more excellent in bondability to paper.
(4) The method of (2), wherein the first heat seal layer and the second heat seal layer comprise paraffin wax.
   According to such a configuration, the laminated body is more excellent in water vapor barrier property.
(5) The method of any one of (1) to (4), wherein the acrylic resin comprises an acrylic emulsion having a core-shell structure.
   According to such a configuration, the laminated body is more excellent in oxygen barrier property and water vapor barrier property. Moreover, the laminated body is more excellent in disintegrating property of paper during recycling.
(6) The method of (5), wherein the core of the acrylic emulsion having the core-shell structure comprises styrene and 2-ethylhexyl acrylate as monomers.
   According to such a configuration, the laminated body is more excellent in oxygen barrier property and water vapor barrier property. Moreover, the laminated body is more excellent in disintegrating property of paper during recycling.
(7) The method of (5) or (6), wherein the shell of the acrylic emulsion having the core-shell structure comprises styrene/acryl-based resin.

According to such a configuration, the laminated body is more excellent in oxygen barrier property and water vapor barrier property. Moreover, the laminated body is more excellent in disintegrating property of paper during recycling.

### EXAMPLE

Hereinafter, the present invention will be described in more detail with reference to Examples. The present invention is not limited to these Examples. Besides, unless otherwise specified, "%" means "% by mass", and "part" means "part by mass".

Raw materials used and a preparation method are shown below.

### (Synthesis of emulsion 1)

An aqueous solution of an ammonia-neutralized product (neutralization equivalent to acid value: 1) of an alkali-soluble resin consisting of 15.4% by mass of acrylic acid and 84.6% by mass of styrene was prepared as a polymer emulsifier. To 20 parts by mass of a resin solid content of this polymer emulsifier, 80 parts by mass of a monomer mixture consisting of 50.0% by mass of styrene, 48.8% by mass of 2-ethylhexyl acrylate, and 1.2% by mass of methacrylic acid was added, and the mixture was emulsion-polymerized by a conventional method to obtain an emulsion 1 having an acid value of 30 mgKOH/g, a glass transition temperature at 30°C, and a solid content concentration of 40% by mass.

### (Synthesis of emulsion 2)

An aqueous solution of an ammonia-neutralized product (neutralization equivalent to acid value: 1) of an alkali-soluble resin consisting of 19.2% by mass of acrylic acid and 80.8% by mass of styrene was prepared as a polymer emulsifier. To 20 parts by mass of a resin solid content of this polymer emulsifier, 80 parts by mass of a monomer mixture consisting of 38.5% by mass of styrene and 61.5% by mass of 2-ethylhexyl acrylate was added, and the mixture was emulsion-polymerized by a conventional method to obtain an emulsion 2 having an acid value of 30 mgKOH/g, a glass transition temperature at 10°C, and a solid content concentration of 40% by mass.

### (Synthesis of emulsion 3)

An aqueous solution of an ammonia-neutralized product (neutralization equivalent to acid value: 1) of an alkali-soluble resin consisting of 19.2% by mass of acrylic acid and 80.8% by mass of styrene was prepared as a polymer emulsifier. To 20 parts by mass of a resin solid content of this polymer emulsifier, 80 parts by mass of a monomer mixture consisting of 31.9% by mass of styrene and 68.1% by mass of 2-ethylhexyl acrylate was added, and the mixture was emulsion-polymerized by a conventional method to obtain an emulsion 3 having an acid value of 30 mgKOH/g, a glass transition temperature at 0°C, and a solid content concentration of 40% by mass.

### (Synthesis of emulsion 4)

An aqueous solution of an ammonia-neutralized product (neutralization equivalent to acid value: 1) of an alkali-soluble resin consisting of 19.2% by mass of acrylic acid and 80.8% by mass of styrene was prepared as a polymer emulsifier. To 20 parts by mass of a resin solid content of this polymer emulsifier, 80 parts by mass of a monomer mixture consisting of 25.4% by mass of styrene and 74.6% by mass of 2-ethylhexyl acrylate was added, and the mixture was emulsion-polymerized by a conventional method to obtain an emulsion 4 having an acid value of 30 mgKOH/g, a glass transition temperature at -10°C, and a solid content concentration of 40% by mass.

### (Synthesis of emulsion 5)

An aqueous solution of an ammonia-neutralized product (neutralization equivalent to acid value: 1) of an alkali-soluble resin consisting of 19.2% by mass of acrylic acid and 80.8% by mass of styrene was prepared as a polymer emulsifier. To 20 parts by mass of a resin solid content of this polymer emulsifier, 80 parts by mass of a monomer mixture consisting of 18.9% by mass of styrene and 81.1% by mass of 2-ethylhexyl acrylate was added, and the mixture was emulsion-polymerized by a conventional method to obtain an emulsion 5 having an acid value of 30 mgKOH/g, a glass transition temperature at -20°C, and a solid content concentration of 40% by mass.

### (Synthesis of emulsion 6)

An aqueous solution of an ammonia-neutralized product (neutralization equivalent to acid value: 1) of an alkali-soluble resin consisting of 19.2% by mass of acrylic acid and 80.8% by mass of styrene was prepared as a polymer emulsifier. To 20 parts by mass of a resin solid content of this polymer emulsifier, 80 parts by mass of a monomer mixture consisting of 12.5% by mass of styrene and 87.5% by mass of 2-ethylhexyl acrylate was added, and the mixture was emulsion-polymerized by a conventional method to obtain an emulsion 6 having an acid value of 30 mgKOH/g, a glass transition temperature at -30°C, and a solid content concentration of 40% by mass.

### (Synthesis of emulsion 7)

An aqueous solution of an ammonia-neutralized product (neutralization equivalent to acid value: 1) of an alkali-soluble resin consisting of 19.2% by mass of acrylic acid and 80.8% by mass of styrene was prepared as a polymer emulsifier. To 20 parts by mass of a resin solid content of this polymer emulsifier, 80 parts by mass of a monomer mixture consisting of 6.1% by mass of styrene and 93.9% by mass of 2-ethylhexyl acrylate was added, and the mixture was emulsion-polymerized by a conventional method to obtain an emulsion 7 having an acid value of 30 mgKOH/g, a glass transition temperature at -40°C, and a solid content concentration of 40% by mass.

### (Anchor coat agent)

· Anchor coat agent 1: The above-described emulsion 2 was used.

### (Gas barrier agent)

· Gas barrier agent 1: Eco Stage GB (manufactured by SAKATA INX CORPORATION), a composition containing an inorganic filler and a barrier resin.

Properties of the obtained emulsions 1 to 7 are as described in Table 1 below.

**Table 1**

| Type of emulsion | Shell | Core | Tg | Acid value (mgKOH/g) |
|---|---|---|---|---|
| Emulsion 1 | St-Ac | St/2EHA/MAA | 30 | 30 |
| Emulsion 2 | St-Ac | St/2EHA | 10 | 30 |
| Emulsion 3 | St-Ac | St/2EHA | 0 | 30 |
| Emulsion 4 | St-Ac | St/2EHA | -10 | 30 |
| Emulsion 5 | St-Ac | St/2EHA | -20 | 30 |
| Emulsion 6 | St-Ac | St/2EHA | -30 | 30 |
| Emulsion 7 | St-Ac | St/2EHA | -40 | 30 |

### (Manufacturing of heat seal agent)

According to Table 2 below, the emulsions 1 to 7 were defined as heat seal agents 1 to 7, respectively. Paraffin wax (product name: "Peltor K-3A", manufactured by TOHO Chemical Industry Co., Ltd.) was added to the emulsions 2 to 5 so as to give a content of 10% by mass to a solid content, obtaining heat seal agents 8 to 11. Besides, as a heat seal agent 12, an ionomer dispersion (product name: "CHEMIPEARL S-500", a water dispersion of a polyolefin resin, solid content: 42%, manufactured by Mitsui Chemicals, Inc.) was used.

**Table 2**

| Type of heat seal agent | Emulsion | Paraffin wax |
|---|---|---|
| Heat seal agent 1 | Emulsion 1 | 0 |
| Heat seal agent 2 | Emulsion 2 | 0 |
| Heat seal agent 3 | Emulsion 3 | 0 |
| Heat seal agent 4 | Emulsion 4 | 0 |
| Heat seal agent 5 | Emulsion 5 | 0 |
| Heat seal agent 6 | Emulsion 6 | 0 |
| Heat seal agent 7 | Emulsion 7 | 0 |
| Heat seal agent 8 | Emulsion 2 | 10% (to solid content) |
| Heat seal agent 9 | Emulsion 3 | 10% (to solid content) |
| Heat seal agent 10 | Emulsion 4 | 10% (to solid content) |
| Heat seal agent 11 | Emulsion 5 | 10% (to solid content) |
| Heat seal agent 12 | Ionomer dispersion | |

### (Example 1)

### (Production of first laminated body)

The above-described anchor coat agent 1 was diluted with water into a solid content of 42% by mass, applied onto a coat ball paper (manufactured by Rengo Co., Ltd., basis weight: 230 g/m², a first paper layer) so as to give a solid content of 10 g/m² with a bar coater (0.3 mm), and dried in an oven at 100°C for 20 seconds to form a first anchor coat layer. Next, the above-described gas barrier agent 1 was applied onto the first anchor coat layer so as to give a solid content of 3 g/m² with the bar coater and dried in the oven at 100°C for 10 seconds to form a first gas barrier layer. Then, the heat seal agent 1 was applied onto the first gas barrier layer so as to give a solid content of 10 g/m² with the bar coater and dried in the oven at 100°C for 10 seconds to form a first heat seal layer. As a result from above, a first laminated body was produced.

### (Production of second laminated body)

A second laminated body comprising a second paper layer, a second anchor coat layer, a second gas barrier layer, and a second heat seal layer was produced by the same method as for the first laminated body.

### (Production of laminated body)

A polysand processing was performed by overlaying the first heat seal layer of the first laminated body and the second heat seal layer of the second laminated body as described above on top of each other and heating them with an iron at 100°C for 10 seconds and integrating them. As a result from above, a laminated body of Example 1 was produced.

### (Examples 2 to 11, Comparative examples 1 to 3)

Laminated bodies were produced in the same method as in Example 1, except for changing the formulation to those shown in Table 3 below. Besides, in Table 3, parts marked with "-" indicate that no corresponding layer was formed.

**Table 3**

| | Comparative example 1 | Comparative example 2 | Comparative example 3 | Example 1 | Example 2 | Example 3 | Example 4 |
|---|---|---|---|---|---|---|---|
| Anchor coat layer | *1 | Anchor coat agent 1 | Anchor coat agent 1 | Anchor coat agent 1 | Anchor coat agent 1 | Anchor coat agent 1 | Anchor coat agent 1 |
| Gas barrier layer | - | Gas barrier agent 1 | Gas barrier agent 1 | Gas barrier agent 1 | Gas barrier agent 1 | Gas barrier agent 1 | Gas barrier agent 1 |
| Heat seal layer | - | - | Heat seal agent 12 | Heat seal agent 1 | Heat seal agent 2 | Heat seal agent 3 | Heat seal agent 4 |
| Disintegrating property | × | ○ | ○ | ○ | ○ | ○ | ○ |
| Oxygen barrier | 2000 | 3 | 3 | 3 | 3 | 3 | 3 |
| Water vapor barrier | 10 | 500 | 500 | 70 | 10 | 10 | 10 |
| Bondability to paper (seal) | ○ | × | ○ | Δ | ○ | ○ | ○ |

| | Example 5 | Example 6 | Example 7 | Example 8 | Example 9 | Example 10 | Example 11 |
|---|---|---|---|---|---|---|---|
| Anchor coat layer | Anchor coat agent 1 | Anchor coat agent 1 | Anchor coat agent 1 | Anchor coat agent 1 | Anchor coat agent 1 | Anchor coat agent 1 | Anchor coat agent 1 |
| Gas barrier layer | Gas barrier agent 1 | Gas barrier agent 1 | Gas barrier agent 1 | Gas barrier agent 1 | Gas barrier agent 1 | Gas barrier agent 1 | Gas barrier agent 1 |
| Heat seal layer | Heat seal agent 5 | Heat seal agent 6 | Heat seal agent 7 | Heat seal agent 8 | Heat seal agent 9 | Heat seal agent 10 | Heat seal agent 11 |
| Disintegrating property | ○ | ○ | ○ | ○ | ○ | ○ | ○ |
| Oxygen barrier | 3 | 3 | 3 | 3 | 3 | 3 | 3 |
| Water vapor barrier | 20 | 100 | 100 | 10 | 10 | 10 | 20 |
| Bondability to paper (seal) | ○ | Δ | Δ | ○ | ○ | ○ | ○ |

| | | | | | | | |
|---|---|---|---|---|---|---|---|
| *1. No anchor agent was used, but a paper base material in which polyethylene (50 µm) were attached together was used. | | | | | | | |

The laminated bodies of Examples and Comparative examples as obtained above were evaluated for disintegrating property, oxygen barrier property, water vapor barrier property, and bondability to paper (seal) according to the following evaluation methods. The results are shown in Table 3.

### <Disintegrating property>

The laminated body was cut into 2 cm × 2 cm, charged into a caustic soda aqueous solution (pH=9), and held at 25°C. After 24 hours, stirring was performed for 5 minutes using a Tappi pulp disintegrator (manufactured by Toyo Seiki Co., Ltd.), and a degree of disentanglement of paper was evaluated according to the following evaluation criteria.

### (Evaluation criteria)

○: Paper did not clump and became disentangled.
△: Partial clumping of paper was observed (paper were stuck together with resin).
×: Paper remained clumped and did not become disentangled.

### <Oxygen barrier property>

After leaving the laminated body to stand in an atmosphere at 25°C and 90% RH for 72 hours, an oxygen permeability (OTR value, cc/m²/day/atm) was measured with an oxygen permeability measuring device (manufactured by AMETEK MOCON, product name: OX-TRAN 1/50), according to JIS K 7126 B Method. Besides, oxygen barrier property can be determined to be excellent when the oxygen permeability is 20 or less, and particularly excellent when it is 10 or less.

### <Water vapor barrier property>

A water vapor permeability (WVTR value, g/m²/day) of the laminated body was measured according to JIS Z 0222. Specifically, each laminated body was made into a bag so as to have the same volume with a bag having a size of 10 cm × 10 cm, filled with 15 g of calcium chloride, and then heat-sealed. This bag was placed in a thermo-hygrostat at 40°C and 90% RH to measure a mass every 5 days. A water vapor permeability was calculated from a slope of a regression line between an elapsed time and a bag mass after the 3rd day. Besides, water vapor barrier property can be determined to be excellent when the water vapor permeability is 150 or less, and particularly excellent when it is 50 or less.

### <Bondability to paper (seal)>

A polysand processing was performed by overlaying the first heat seal layer of the first laminated body and the second heat seal layer of the second laminated body as described above on top of each other and heating them with an iron at 180°C for 5 seconds and integrating them. The obtained laminated body was disintegrated and evaluated according to the following evaluation criteria.

### (Evaluation criteria)

○: Paper was peeled off when taken off.
△: Interfacial peeling occurred when paper was taken off.
×: Paper did not bond.

As shown in Table 3, the laminated bodies of Examples 1 to 11 were easily manufactured through the polysand step. Moreover, the laminated bodies were excellent in oxygen barrier property and water vapor barrier property. Furthermore, the laminated bodies had a good disintegrating property to paper during recycling.

## Claims

1. A method of manufacturing a laminated body, the method including a polysand step of overlaying a first laminated body and a second laminated body on top of each other and integrating them via a heat seal layer,
wherein the first laminated body comprises a first paper layer, a first anchor coat layer, and a first gas barrier layer,
wherein the second laminated body comprises a second paper layer, a second anchor coat layer, and a second gas barrier layer,
wherein at least one of the first laminated body and the second laminated body comprises a heat seal layer,
wherein the polysand step is a step of integrating the first laminated body and the second laminated body via the heat seal layer, and
wherein the heat seal layer contains an acrylic resin.

2. The method of manufacturing the laminated body of claim 1,
wherein the first laminated body comprises a first heat seal layer containing an acrylic resin,
wherein the second laminated body comprises a second heat seal layer containing an acrylic resin, and
wherein the heat seal layer is a layer in which the first heat seal layer and the second heat seal layer are overlayed on top of each other and integrated in the polysand step.

3. The method of manufacturing the laminated body of claim 1 or 2, wherein a glass transition temperature of the acrylic resin is -25°C to 20°C.

4. The method of manufacturing the laminated body of claim 2, wherein the first heat seal layer and the second heat seal layer comprise paraffin wax.

5. The method of manufacturing the laminated body of any one of claims 1 to 4, wherein the acrylic resin comprises an acrylic emulsion having a core-shell structure.

6. The method of manufacturing the laminated body of claim 5, wherein the core of the acrylic emulsion having the core-shell structure comprises styrene and 2-ethylhexyl acrylate as monomers.

7. The method of manufacturing the laminated body of claim 5 or 6, wherein the shell of the acrylic emulsion having the core-shell structure comprises styrene/acryl-based resin.
